# EUROPEAN PATENT APPLICATION

(11) **EP 2 108 255 A2**
(43) Date of publication of application: **14.10.2009**
(21) Application number: 09166781.6
(22) Date of filing: 11.05.2005
(51) Int. Cl.: A01K 61/00

(54) **System for raising aquatic animals**

(30) Priority: 11.05.2004 US 569632 P
(62) Divisional of application: 05745123.9
(71) Applicant: O.K. Technologies, LLC, Greensboro, NC 27401 (US)
(72) Inventor: Olivier, Laurent, Vero Beach, FL 32967 (US); Massar, Steven, Stuart, FL 34997 (US)
(74) Representative: Brand, Thomas Louis

(57) **Abstract**

The present invention relates to systems and apparatuses for raising aquatic animals in controlled environments in order to avoid disease and pollution, and for increasing the number of shrimp that can be raised in controlled environments. More particularly, the present invention generally relates to a shelving unit for raising aquatic animals in controlled environment comprising a plurality of shelves having a top and bottom surface, wherein at least one surface is substantially solid to support the aquatic animals thereon and to allow feeding thereon by the aquatic animals. Also provided are systems comprising closed environments for containing water, at least one shelving unit, a feeding system for dispensing food onto the shelving unit, and a waste disposal system.

## Description

### RELATED APPLICATION

This non-provisional application is related to and claims priority to Provisional Application No. 60/569,632 filed on May 11, 2004 in the name of Laurent OLIVIER, entitled SYSTEM FOR RAISING AQUATIC ANIMALS, the contents of which is fully incorporated herein by reference.

### FIELD OF THE INVENTION

The present invention relates to systems and apparatuses for raising aquatic animals in controlled environments in order to avoid disease and pollution. More particularly, the present invention relates to semi-intensive, intensive, and super intensive shrimp culturing systems, including multi-level closed environment apparatuses, for increasing the number of shrimp that can be raised per volume of water in such systems.

### BACKGROUND

Various systems and apparatuses are known in the art for raising aquatic animals. Traditional shrimp farms, for example, are usually made up of a large number of open-air ponds filled with ocean water. When the water in these ponds becomes saturated with waste, food, and other impurities, it must be replaced with fresh water from the ocean. To facilitate this water exchange, these shrimp ponds are usually built at sea level, and are located in close proximity to the ocean. This design, however, aside from being extremely expensive due to the cost of the land itself, leaves the shrimp vulnerable to diseases present in the ocean water, changes in weather and temperature, and predators.

Additionally, each shrimp needs a certain amount of space in which to grow, and the surface area provided along the bottom surface of a shrimp pond can be a limiting factor of the number of shrimp cultivated in each pond. Generally, a semi-intensive shrimp farming system will yield 5 shrimp per square foot of surface area at the bottom of a pond, and will yield a crop approximately twice a year. An intensive farming system may yield up to 15 shrimp per square foot of surface area at the bottom of the pond, and will produce 2.5 crops per year.

It is desirable, therefore, to be able to control the factors that can affect the growth of shrimp, such as weather, temperature, diseases, predators, and the size of the pond. It is also beneficial to reduce costs by providing, within a controlled environment, a larger surface area to maximize the amount of shrimp grown on a limited amount of floor space. Additionally, these controlled environments can be located inland, avoiding the expense of purchasing coastal land.

### SUMMARY

It is an object of the present invention to provide improved systems and apparatuses for raising aquatic animals, in particular, shrimp.

The present invention includes shelving units comprised of a plurality of parallel shelves spaced vertically, one on top of the other. These shelving units provide an increased amount of surface area to maximize the number of aquatic animals that may be raised within a closed environment occupying a limited amount of floor space. One embodiment of the present invention is directed to a shelving unit designed with shelves that slope downward at an angle θₛ from horizontal. Each individual shelf can comprise a substantially solid top and bottom surface sufficient to support aquatic animals and allow feeding by the aquatic animals. The combination of these features allows food and waste to be easily moved down the surface of the shelves and into the bottom of the closed environment to facilitate cleaning.

Another embodiment of the present invention is directed to a helical shaped shelving unit for increasing the number of aquatic animals that may be raised per square footage of floor space in a closed environment. The shelving unit comprises a helical shaped shelf comprising a substantially solid top and bottom surface sufficient to support aquatic animals and to allow feeding by the aquatic animals. Preferably, the shelf spirals downward at an angle θₛ from horizontal. In another embodiment, the shelf may have a raised outside rim for retaining food dispensed onto the shelf.

An alternative embodiment of the present application is directed to systems for raising aquatic animals. These systems comprise a closed environment for holding water. One embodiment of this system incorporates the shelving unit comprised of parallel shelves described above, in order to increase the surface area available for growing shrimp within the closed environment. Another embodiment of this system incorporates the shelving unit comprising a helical shaped shelf, described above. The shelf preferably spirals downward at an angle θₛ from horizontal.

In addition to the shelving units, alternative embodiments of these systems for raising aquatic animals employ a feeding system to dispense food onto the shelves. In other embodiments a means is employed for flowing water over the surface of each of the shelves in the general direction of the downward slope of the shelves, which allows the flow of the water to aid in removal of any excess food or waste products from the surface of the shelves. Preferably, a waste disposal system is employed to remove excess food and waste products from the closed environment. The systems of the present invention may also comprise a closed environment for holding water.

These and other embodiments will be discussed more fully in the detailed description of the embodiments.

### BRIEF DESCRIPTION OF THE DRAWINGS

The accompanying drawings, which are incorporated in and constitute a part of this specification, illustrate exemplary embodiments of the invention and, together with the written description, serve to explain the principles of the invention.

In the drawings:
Figures 1A and 1B are schematic drawings of systems for raising aquatic animals employing parallel shelves which are vertically spaced, according to certain embodiments of the present invention.
Figures 2 and 3 are schematic drawings of systems for raising aquatic animals employing helical shaped shelves, according to certain embodiments of the present invention.
Figure 4 is a three dimensional drawing of a helical shaped shelf, according to certain embodiments of the present invention.
Figure 5 is a schematic drawing illustrating a helical shaped shelf fabricated in multiple sections, according to certain embodiments of the present invention.
Figures 6 and 7 are schematic drawings of overflow configurations which may be employed in systems for raising aquatic animals, according to certain embodiments of the present invention.
Figure 8 is a schematic drawing illustrating certain structural details of one embodiment of a vertically spaced, parallel shelving unit, according the present invention.
Figures 9 and 13 illustrate various arrangements of shelving units in systems for raising aquatic animals, according to certain embodiments of the present invention.
Figures 10A to 12B illustrate various designs for spiral shaped shelving units, according to certain embodiments of the present invention.
Figures 14 and 15 illustrate systems for dispensing food, which may be used in systems for raising aquatic animals, according to certain embodiments of the present invention.
Figures 16A and 16B illustrate a system for harvesting aquatic animals, according to certain embodiments of the present invention.
Figures 17 and 18 illustrate additional systems for dispensing food, which may be used in systems for raising aquatic animals, according to certain embodiments of the present invention.

### DETAILED DESCRIPTION

In the following description, reference is made to the accompanying drawings, in which are shown by way of illustration specific exemplary embodiments in which the invention may be practiced. These embodiments are described in sufficient detail to enable those skilled in the art to practice the invention, and it is to be understood that other embodiments may be utilized and that changes may be made without departing from the scope of the present invention. The following description is, therefore, not to be taken in a limited sense. Wherever possible, the same reference numbers are used throughout the drawings to refer to the same or like parts.

The methods and systems of the present invention can be applied to raising various types of aquatic animals, for example shrimp, in applications utilizing fresh water, salt water, and mixtures thereof. While the broadest principles of the invention are applicable to many, if not all, of these potential applications, preferred methods and systems are disclosed for specific applications, or ranges of applications.

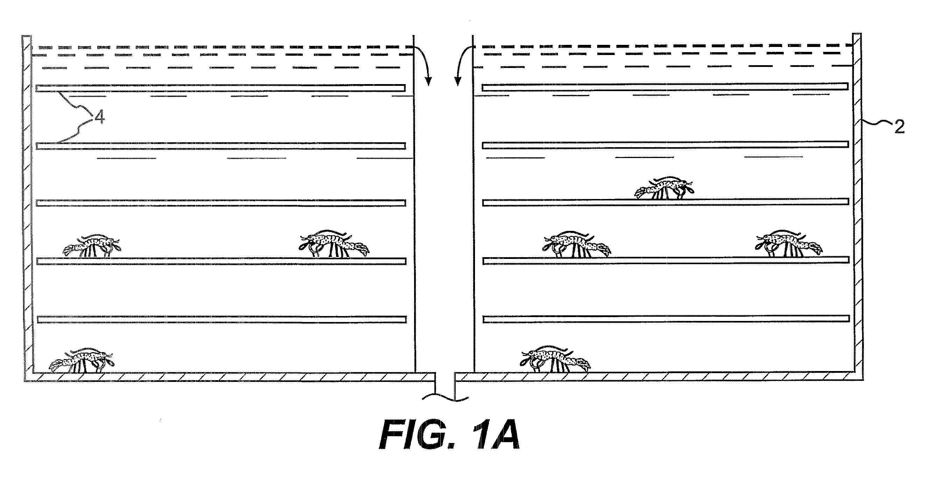

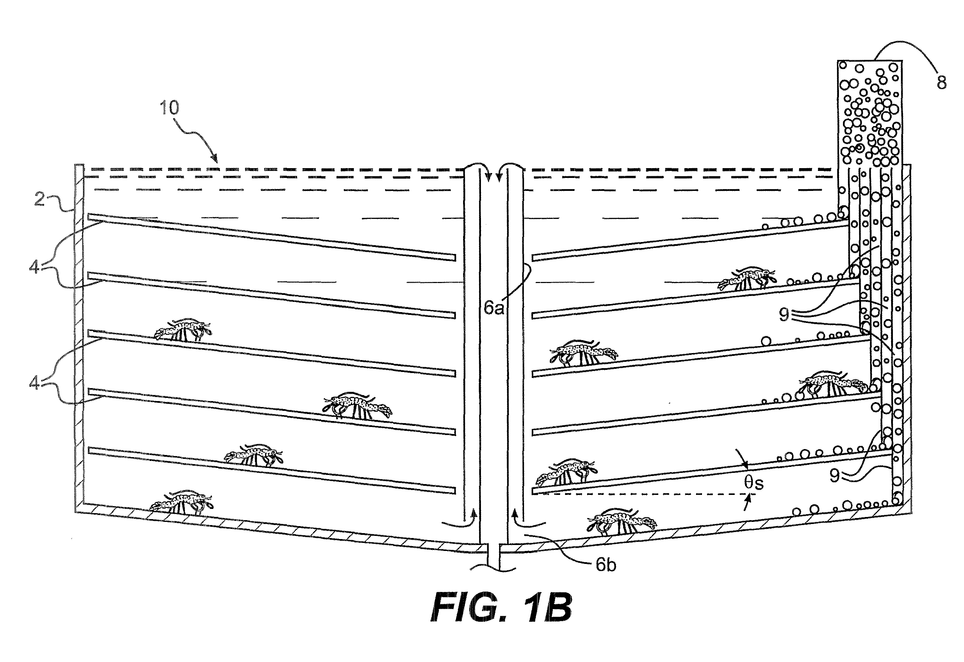

The physical characteristics of the systems of the present invention can vary considerably, while still practicing the present invention. Non-limiting examples potential embodiments of the present invention are shown in Figures 1 through 18.

The present invention will be described hereafter with reference to various tanks used for holding water. However, it is to be understood that the concepts of the present invention are generally applicable to a wide variety of closed environments generally employed for raising aquatic animals, for example, enclosures such as covered or uncovered tanks, lagoons, and ponds. Such enclosures may, for example, be located either outdoors or indoors in, for example, a green house or warehouse. The concepts of the present invention are generally applicable to recirculating aquaculture systems and other systems known in the art for raising shrimp and other aquatic animals.

Figures 1A and 1B are schematic drawings illustrating alternative embodiments of systems for raising aquatic animals, particularly shrimp, according to the present invention. Figure 1A illustrates a system comprising a tank 2 for holding water. The tank may be any practical shape or size. The tank 2 is preferably constructed from material that is safe for the aquatic animals and will not easily corrode. Non-limiting examples of such materials include concrete, plastic, and fiberglass reinforced plastic (FRP). The tank may also be, for example, a metal or wood container lined with plastic. One embodiment of the present invention contains windows placed in the sides of tank 2 to allow visual inspection of the amount of food in the tank, as well as the health of the shrimp.

In another embodiment, the floor of the tank 2 has a conical, or frustra conical shape, as illustrated in Figure 1B, such that the floor of the tank is inclined to allow excess food and waste products to collect at a low surface of the tank floor. The degree of the incline may range, for example, from about 5 ° to about 80° from horizontal, and more preferably from about 20° to about 45°.

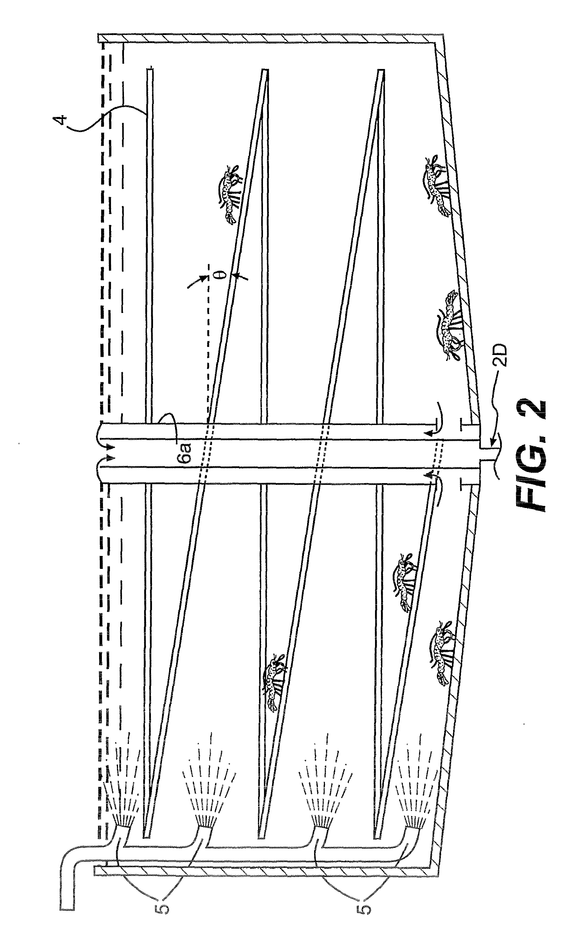

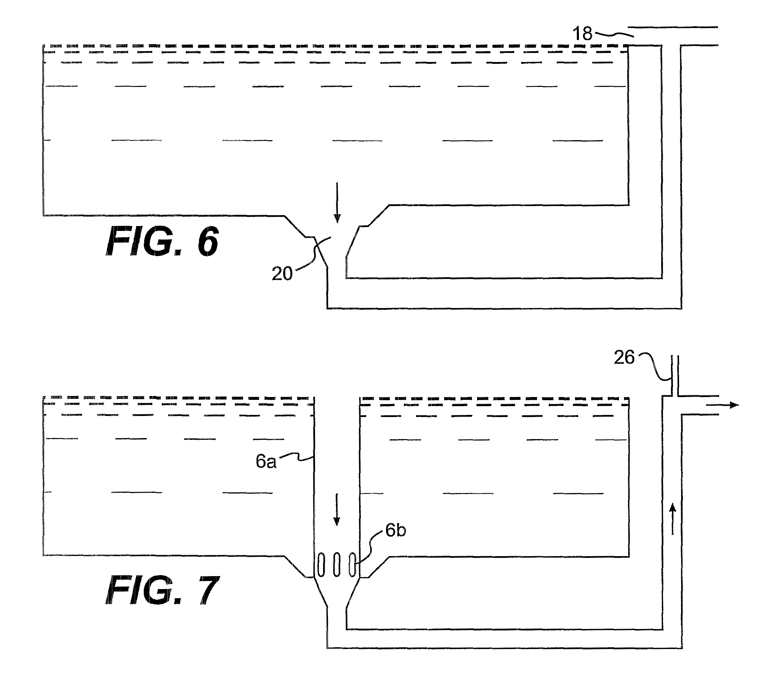

In yet another embodiment, an overflow system is employed to prevent water in tank 2 from overflowing. In certain embodiments, for example, as illustrated in Figure 6, the overflow system comprises at least one skimmer 18 positioned on the side of the tank at the desired water level, allowing excess water to drain from the tank. In another embodiment, at least one drain 20 at the bottom of tank 2 is used to drain water from the bottom of tank 2, and is in fluid connection with skimmer 18, as shown in Figure 6. In an alternative embodiment, illustrated in Figure 1A, at least one tube 6a is positioned at a height in the tank corresponding to a desired maximum water level in the tank. When the desired maximum water level is reached, excess water will then spill over into tube 6a and drain from the tank. In certain embodiments, an overflow system, which also has at least one opening near the bottom of tank 2, may be used to allow water to drain from the bottom. An example of such an overflow system, as illustrated in Figures 1B and 2, allows water to drain from the bottom of the tank by first flowing up from openings 6b between outer and inner concentric pipes, and then flowing back down through the inner overflow pipe. Similar overflow systems are known in the art, and are compatible with the tank 2. In the embodiment illustrated in Figure 7, a vent pipe 26 is placed in drain pipe 20 to allow equilibration of pressure in pipe 20 with the outside air and to allow the water to drain effectively. Drain 20 in the embodiment illustrated in Figure 6, and openings 6b in Figure 7, act as a waste disposal system, allowing removal of excess food and waste products collecting at the low surface of tank 2 to be removed from the system. Other overflow designs may also be used, as will be appreciated by one of ordinary skill in the art.

In an alternative embodiment, at least one shelving unit is placed inside tank 2. In the embodiment illustrated in Figure 1A, each shelving unit comprises a plurality of parallel shelves 4, which are spaced vertically from each other. The vertical distance between the shelves allows sufficient space for the shrimp to live between the shelves. The space between the shelves may range from about 2 to about 12 inches, or more, and preferably ranges from about 3 to about 4 inches.

The shelves may be made of any practical material, or combination of materials, which will safely support the shrimp and not easily corrode. In one embodiment, the shelves are made from at least one material having a density greater than the density of water, so that the shelves will remain submerged in the water without being anchored to the tank. For example, plastic having a density greater than water, such as PVC, may be used. If a material, or combination of materials, having a density less than that of water is used, the shelves may be anchored to the tank, or alternatively, at least one weight may be attached to the shelving unit to adjust the weight of the shelving unit accordingly.

Each individual shelf 4 forms a substantially solid top surface such that food can be supported and dispersed along the upper surface of the shelf. This increases the feeding area for shrimp, and allows the shrimp to remain more stationary as compared to conventional systems which require the shrimp to move to a feeding area to feed. The more stationary the shrimp remain, the less calories they will use scavenging for food, which allows them to gain weight at an increased rate.

In one embodiment, the shelves comprise a solid top surface without holes. For example, the shelves may be made of solid sheets of plastic or PVC. In an alternative embodiment, the shelves are textured such that the shrimp may grip the shelves. For example, the shelves may be made from sheets of PVC scratched with large grain sand paper. In yet another embodiment, the bottom surface of the shelves comprises a substantially solid surface to support aquatic animals thereon, and is textured to allow the shrimp to live on both sides of the shelves, thus further increasing the amount of surface area provided as living space for the aquatic animals.

Alternatively, the shelves are designed to have holes formed partially or entirely through them. The holes can, for example, reduce the weight of the shelving unit, as well as allow the shrimp to grip the bottom surface of the shelves. The holes may be any shape, such as rectangular or circular, but should be small enough so that substantially the entire top surface of the shelves will support the food. In certain embodiments, the holes are circular and have a diameter that ranges from about 1/32 inch to about 1/4 inch, and preferably from about 1/8 inch to about 3/16 inch. The shelves may, for example, have any practical thickness, such that the shelves possess the necessary structural strength to support the shrimp and the food. Preferably, the shelves are about 1/8 inch thick.

In certain other embodiments, the shelves may, for example, be made of a mesh, screen, or net, which is sufficiently fine to support the food. In another embodiment, the shelves are held by a support structure, such as, for example, a stainless steel frame.

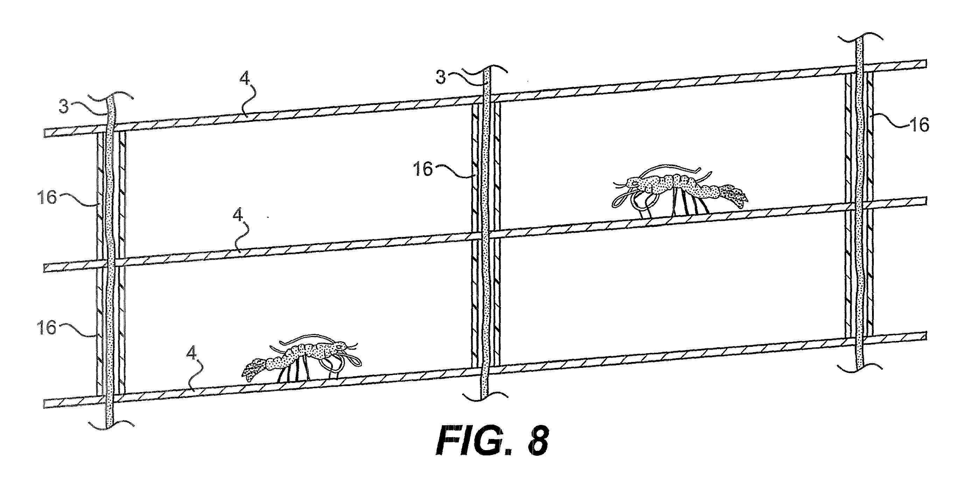

In certain embodiments, the shelves may, for example, be suspended from at least one support device, positioned near the top of the tank, using, for example, ropes, chains, cables or other similar means known in the art. Figure 8 illustrates one embodiment where shelves 4 are suspended by roses 3. Separator sleeves 16 may be used to separate the individual shelves 4. Sleeves 16 may be made of any material, such as, for example, sections of PVC pipe. Any other means known in the art for separating the shelves may be used. For example, the shelves may be separated using knots in the rope large enough to support the shelves, or by individually fastening the shelves at the desired positions of a rope, chain, or cable.

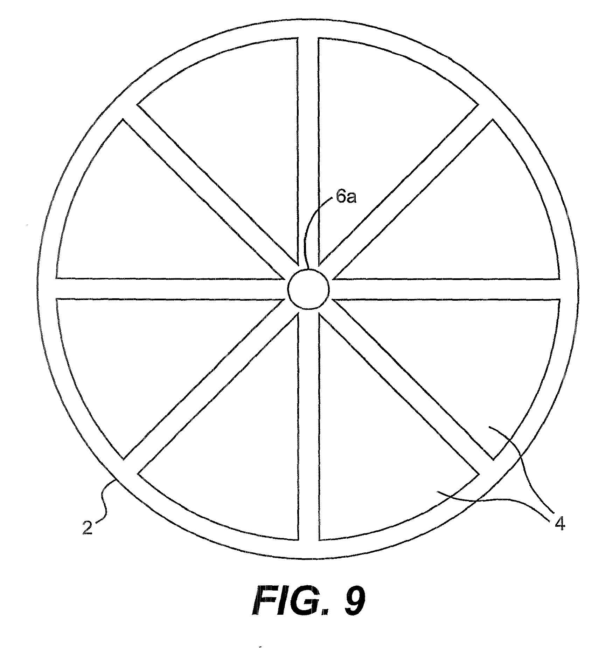

The shelves may have any desired shape that is compatible with the shape of tank 2. For example, if tank 2 is cylindrical, the shelves may have a triangular, or "pie slice" shape, as illustrated in Figure 9. Multiple shelving units may then be positioned in tank 2 in order to provide the maximum living surface area for the shrimp.

In one embodiment, the shelves 4 slope downward at an angle θₛ from horizontal as illustrated in Figure 1B. The angle of the shelves facilitates the dispersal of food, by force of gravity, over the surface of each shelf. The angle of the shelves also facilitates the escape of gas bubbles, which may form in the water or be introduced into the tank for conditioning the water, as is well known in the art. Excess food, as well as waste products excreted by the shrimp, travel the distance of the shelves and fall off the lower end to the bottom of the tank where it is collected and removed from the tank. The angle θₛ may be any angle sufficient to aid in the dispersal of food and collection of excess food and waste products. For example, the angle θₛ may range from about 2° to about 45°, and preferably from about 10° to about 20°.

In another embodiment, a feeding system is employed for dispensing food onto each of the shelves. The feeding system may be automated or manual. In one embodiment, illustrated in Figure 1B, the food dispenser 8 is placed on or near the wall of the tank, so that the food is dispensed along the high edge of the sloped sheaves 4. The food is preferably in the form of pellets, which move down the length of the sloped shelves by force of gravity. To insure that a sufficient amount of food is provided to the shrimp on each shelf, excess food may be dispensed. If the shrimp do not consume all of the food, the excess food is eventually forced off the lower edge of the sloped shelves 4 and collects on the floor of tank 2. In certain embodiments a single food dispenser is used to dispense food to each of the shelves. In other embodiments, multiple dispensers are used, wherein each dispensor may, for example, dispense food to at least one shelf. In yet another embodiment, food can be dispensed manually, through an automatic feeder maintained by a timer, by combinations thereof, or by any other means known in the art.

In the embodiment illustrated in Figure 1B, the food dispenser 8 is a container, which extends along the side of tank 2, having a means for dispensing food to each of the shelves. As illustrated in Figure 1B, at least one tube 9 runs from the container to each one of the shelves, so that food from the container is funneled through the tubes onto the shelves. In another embodiment, a system of tubing connecting each shelf 4 to the outside of tank 2 may be used to provide food to each shelf. For example, a tube may run from each shelf to the upper surface of the tank, so that food dropped into the tube opening is guided to each shelf. Other suitable means known in the art for dispensing food may also be employed.

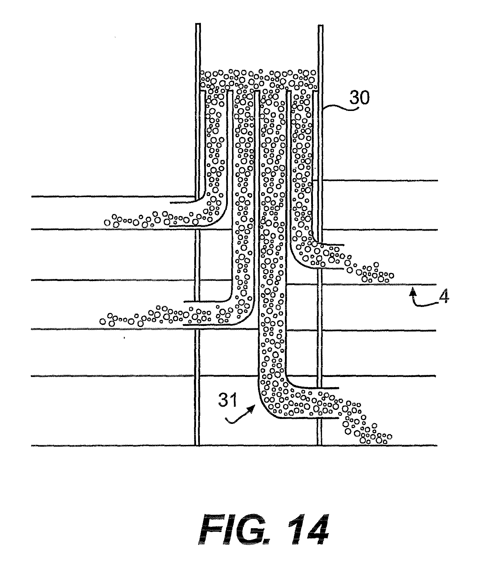

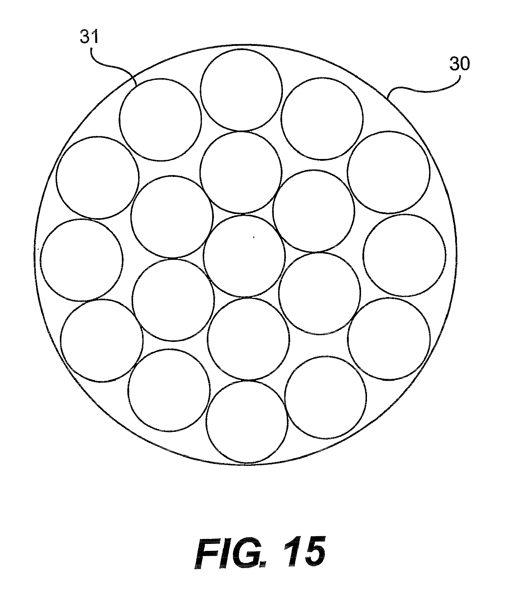

In the embodiment illustrated in Figs. 14 and 15, a single main dispenser 30 is located in the center of the shelving unit, and utilizes satellite tubes 31 to dispense food, for example, every two or three levels. The diameter of the main feeding tube may range, for example, from about 2 inches to about 3 inches, and, accordingly, the satellite tubes may have diameters ranging from about 3/8 inch to 1/2 inch.

Figure 2 illustrates another embodiment of a system for raising aquatic animals, which employs a helical shaped shelf 4. Shelf 4 spirals downward at an angle θₛ from horizontal. The helical shape of the shelf 4 facilitates the water flow within the tank, thus helping to reduce the amount of dead zone in the tank and improve oxygenation; facilitates the dispersal of food by force of gravity over the surface of the shelf; and facilitates the evacuation of excess food, as well as waste products excreted by the shrimp, to the bottom of the tank. The angle θₛ may be any angle sufficient to aid in the dispersal of food and collection of excess food and waste products. In certain embodiments, the angle θₛ ranges from about 2° to about 45°, but preferably from about 10° to about 20°.

Similar to the shelves described above in connection with the embodiment of Figure 1A, the helical shaped shelf comprises a substantially solid top surface to support aquatic animals and disperse food along the top surface of the shelf. As also described above, the shelf may be textured, or have holes formed therein, in order to allow the shrimp to grip the shelves. Similarly, the shelf may comprise a substantially solid and textured bottom surface capable of supporting aquatic animals thereon.

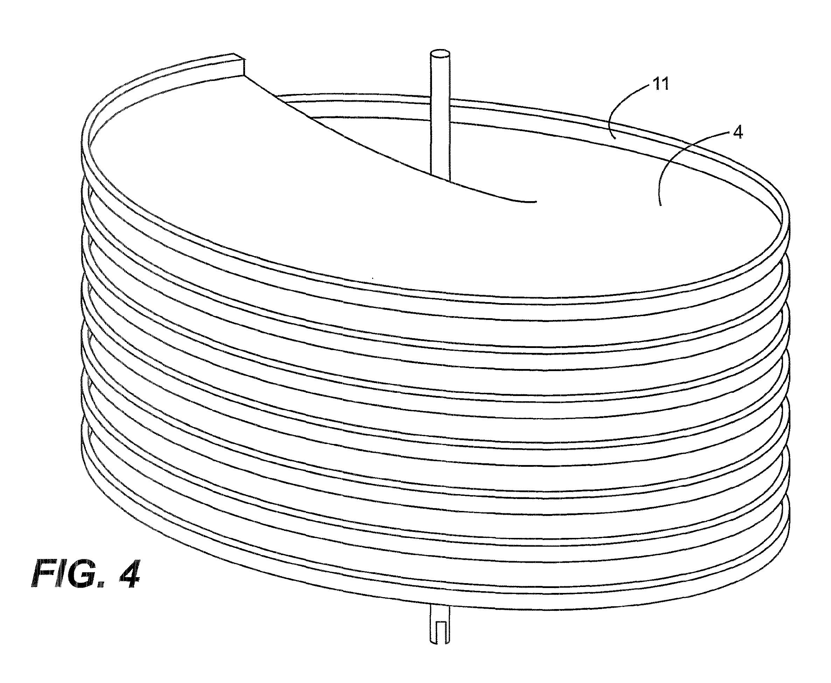

In a preferred embodiment, the helical shelf 4 has a raised outside rim 11, as illustrated in Figure 4, for retaining food dispersed along the length of the shelf.

In certain embodiments, the helical shaped shelving unit can be combined with an overflow system to regulate the level of water in the tank. Any suitable overflow system known in the art may be used. For example, referring again to the embodiment illustrated in Figure 2, the helical shaped shelf 4 spirals around an overflow pipe 6a positioned at its axis. In another embodiment, the helical shelf can be used in conjunction with the type of overflow system illustrated in Figure 6.

The helical shelf may be formed from any material known to those skilled in the art, including materials which are safe for the aquatic animals and provides the desired structural support and corrosion resistance, including, for example, plastic, such as polypropylene, polyethylene, PVC, and FRP.

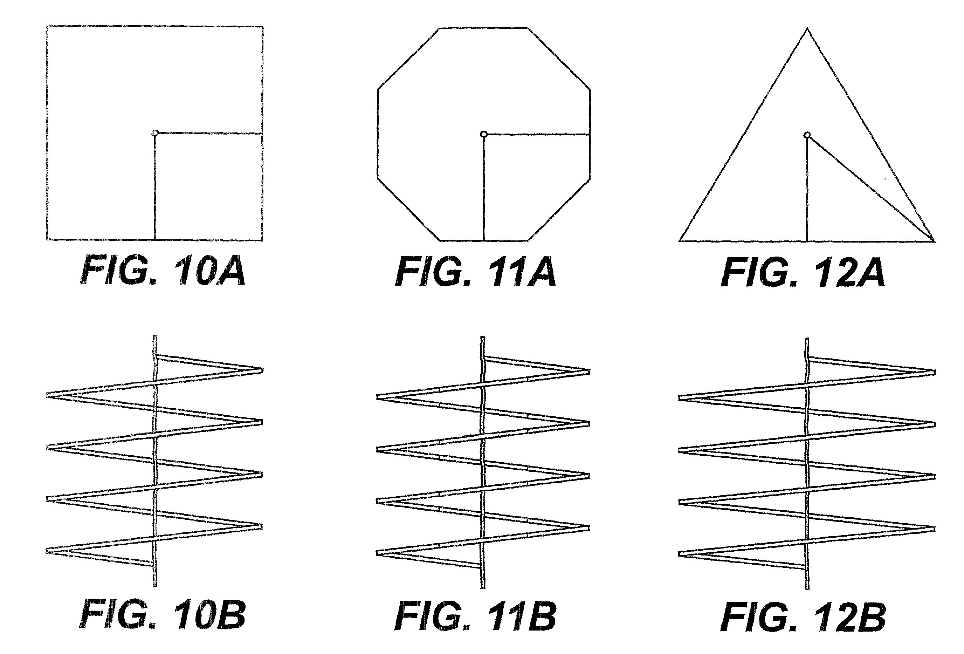

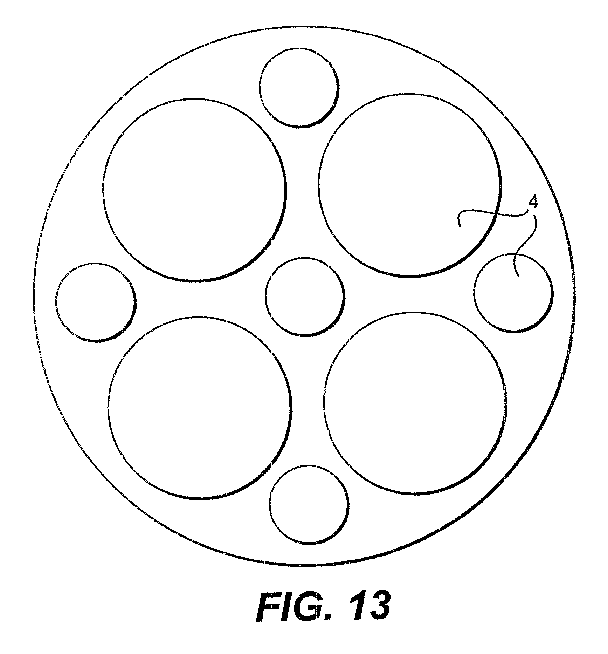

The spiral shelving unit is not limited to a helical shape. As illustrated in Figures 10A-12B, other embodiments include, for example, square, octagonal, triagonal and other polygonal shapes which spiral downward, and any combinations thereof. Another embodiment includes a combination of various sized shelves, arranged as desired within the tank to provide maximum living area for the shrimp, as illustrated in Figure 13. The shelving dimensions vary according to the size and shape of the tank. For example, in one embodiment, the shelves may be fabricated to extend the height of the well to provide maximum living area for the shrimp.

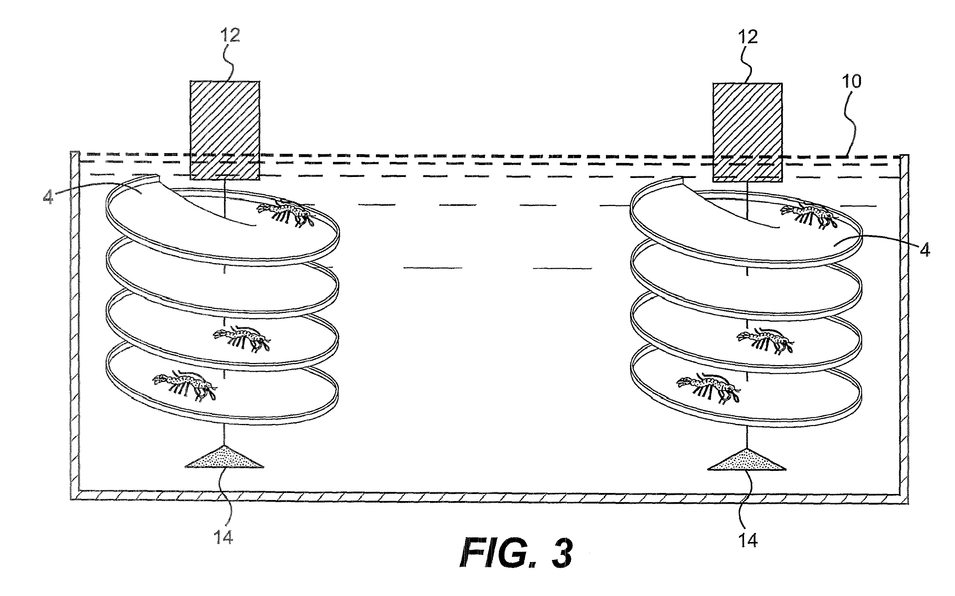

In certain embodiments, the shelves may be suspended from the top of the tank using any type of material, or combination of materials, known to those skilled in the art, including, for example, one or more ropes, chains, and cables. In the embodiment illustrated in Figure 3, shelves 4 are suspended from at least one float 12. At least one weight 14 is used to stabilize the shelves so that they remain positioned as desired in the water. This system of floats and weights may also be used with the embodiment illustrated in Figure 8 to suspend the vertically spaced shelves described above. Embodiments using floating shelves are preferred, for example, for systems where excess silt can build up in the bottom of the closed environment.

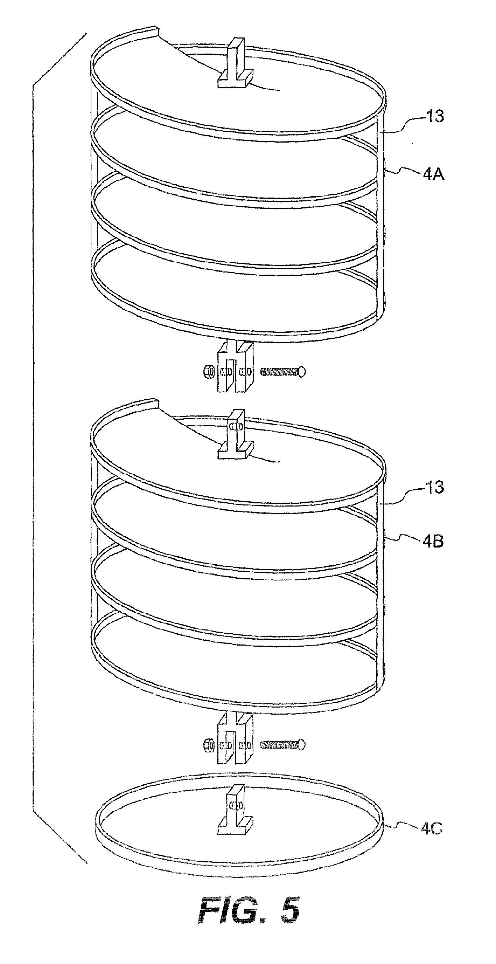

As illustrated in Figure 5, one embodiment of the present invention comprises a shelving unit 4 fabricated from multiple smaller sections 4A and 4B connected together to provide a shelving unit of the desired height. The separate sections can be connected together by any desired means known in the art, including, for example, by using bolts or pins as illustrated in Figure 5. This allows for easy shipping and handling of the shelf sections. For example, each section of the shelving 4A and 4B may range from about 8 inches to about 10 feet in height, or greater, and have a diameter ranging from about 6 inches to about 10 feet, or greater. Smaller sections may also be made for easy shipping, such as, for example, sections having heights ranging from about 24 inches to about 48 inches and diameters ranging from about 24 inches to about 48 inches. Any number of sections may be connected together to form shelving of any desired height. Alternative embodiments include a removable shelf stand 4C, which may be weighted, if desired, to provide a steady base support for the shelving, as well as to keep the shelving from floating in the tank.

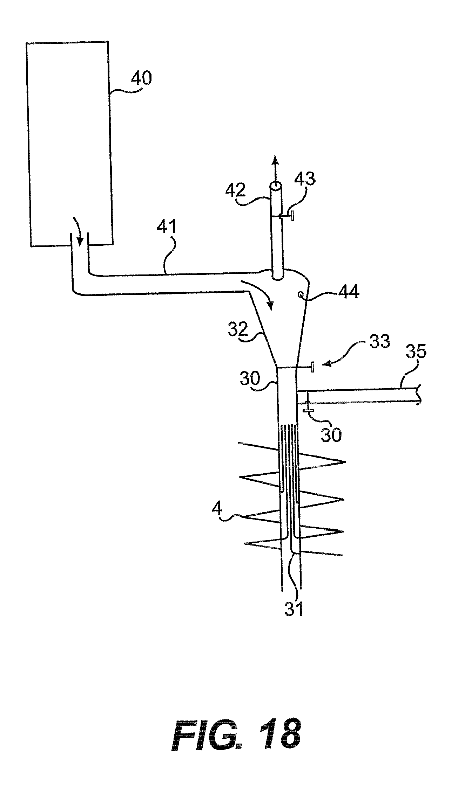

The helical shelving unit may be fabricated by any means known in the art, including, for example, molding techniques where the shelves are formed from plastic molded into the desired helical shape. Examples of fabrication means include welding or otherwise attacking a helical or spiral shaped material to a central support, such as, for example, a length of tubing or a rod, as illustrated in Figure 4. Alternatively, as illustrated in Figures 2 and 18, the overflow system or feeding tube, respectively, can act as the central support. In these embodiments, the helical shelving may be reinforced if desired to help maintain the structural integrity and shape of the shelving unit. In another embodiment, a reinforcing plate 13, as illustrated in Figure 5, is attached to the periphery of the helical shaped shelves.

In yet another embodiment, water is introduced into the tank using jets or outlet pipes 5 in a manner which aligns the direction of the flow of water with the shelving, so that the flow is directed downward along the slope of the shelves. In the embodiment depicted in Figure 2, for example, where a cylindrical tank with helical shelving is used, the flow of water is adjusted so as to circulate in the tank in a direction which will force food and waste products down the spiraling shelves and towards the bottom of the tank. Similarly, where vertically spaced shelves are used, as described above, the flow is preferably directed along the downward slope of the shelves. The flow of water is also beneficial in aiding the harvesting of the aquatic animals.

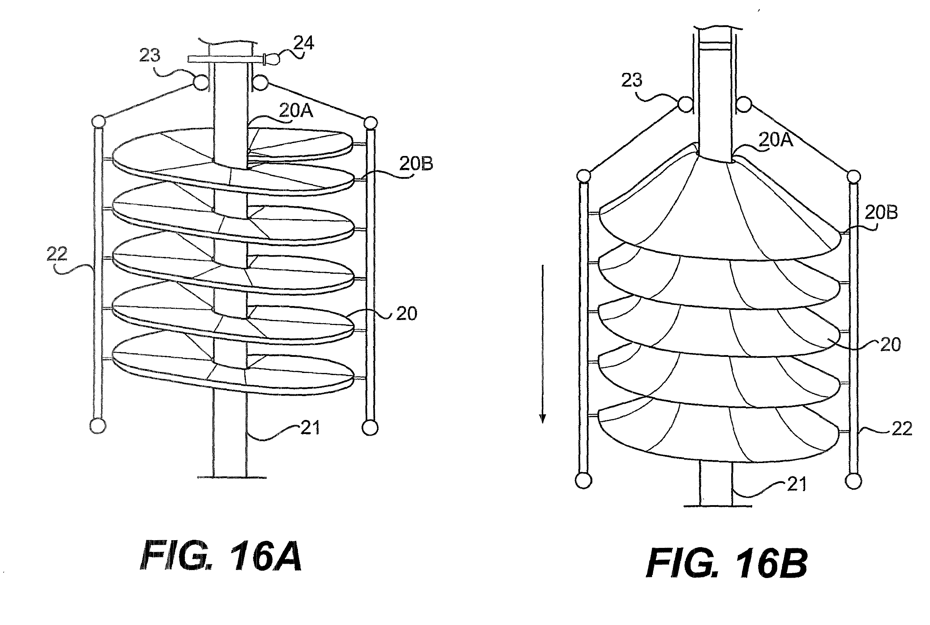

Figure 16A depicts an alternative embodiment of the invention designed to facilitate the removal of the shrimp from the tank when the shrimp are ready to be harvested. In this embodiment, the shelving unit comprises a helical shelf 20 spiraled around a central support 21. The inside edge of each level of the helical shelving unit 20A is attached to the central support 21 by any means known in the art. The outer edge 20B of each level of the helical shelving unit is attached to at least two reinforcing plates 22 located on opposite sides of the shelving unit. The upper end of the plates are attached to a device 23, located above the top layer of the helical shelf, that can move up and down along the outer surface of the central support 21. Figure 16A depicts this system in the farming position, wherein the movable device 23 is held stationary by a pin 24, or any other locking mechanism known in the art. In the farming position, the outer edge 20B of the helical shelving unit is situated above the corresponding portion of the inner edge 20A, to maintain the shrimp on the shelves.

Figure 16B depicts the same system in a harvesting position. As the water in the tank is drained, the locking mechanism on device 23 can be released so that the supports 22 gradually move towards the bottom of the tank 2, and likewise pull the outer edge 20B of each level of the helical shelving downward. Ultimately, the outer edge 20B will be in a position that is below the inner edge 20A, and any shrimp remaining on the helical shelves will be forced off of the shelves by gravity and into the bottom of the tank, where they can be easily harvested as the water is drained from the tank.

In an alternative embodiment, water jets or outlets 5 are used, either alone or in combination with the systems depicted in Figs. 16A and 16B, to introduce water along the direction of the shelving units to force the shrimp along the path of the shelf and into the bottom of the tank where the shrimp can be harvested by drainage.

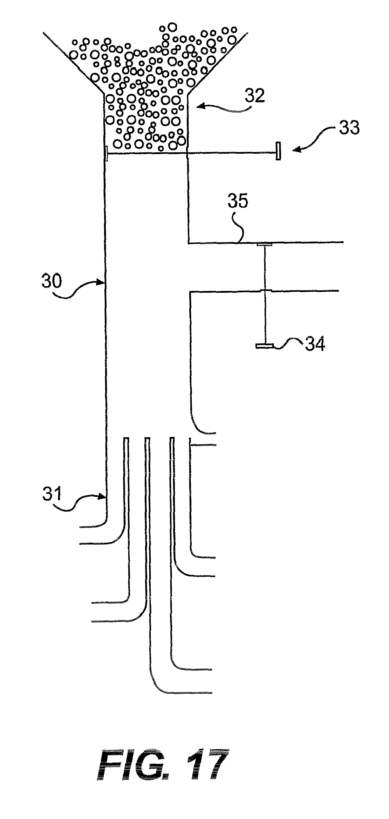

Another embodiment, depicted in Figure 17, illustrates a combination feeding tube and water inlet. In this embodiment, the food is maintained in a cone-shaped reservoir 32, A valve 33 on the lower end of the reservoir controls the distribution of food into the feeding tube 30 and satellite tubes 31. Valve 33 can be controlled automatically. Tube 30 also contains a water inlet 35 regulated by a gate valve 34, and is connected to a pump (not shown). After the desired amount of food enters tube 30, valve 33 is closed, and valve 34 is opened such that the pump forces water through tubes 30 and 31 to flush the food to the different levels of the shrimp condo. In yet another embodiment, inlet 35 is also used during the harvesting of the shrimp to provide water used to flush any shrimp that that remain in the condo during the draining of the tank into the bottom of the tank to be collected. This embodiment may be used as the central support 21 in Figure 16A.

Figure 18 illustrates an alternative embodiment of a food storage and feeding system that may be incorporated into the present invention. Storage container 40 holds dry pellets in a container near the farm, and is in direct communication with the food reservoir 32 via a feeding line 41. Food is transferred from the storage container 40 to the food reservoir 32 through the use of a vacuum tube 42. The vacuum tube contains a valve 43, which, when opened, creates a vacuum to pull food from the storage container 40 through the feeding line 41 and into the food reservoir 32. Food reservoir 32 is fitted with a high level switch 44, such that when the level of food in reservoir 32 reaches a certain level, switch 44 closes valve 43. When valve 43 is closed, there is no vacuum effect, and no further food is transferred from the storage container to the food reservoir. When there is sufficient food in reservoir 32, valve 33 is opened to provide a desired amount of food to the shelves 4 via satellite tubes 31. When valve 33 is closed, valve 34 is opened to flush tubes 30 and 31 with water.

The present invention will now be illustrated by the following specific, non-limiting example.

### EXAMPLE 1

A 6780 gallon cylindrical tank, having a flat bottom with a diameter of 12 feet 6 inches and a height of 8 feet will be used for the calculations in this example. Additionally, it is assumed that a semi-intensive farming system will yield a crop of approximately 5 shrimp per square foot of surface area for growing the shrimp, and an intensive system will yield approximately 15 shrimp per square foot of surface area. Solely for calculation purposes, the average weight of these shrimp is considered to be 20 grams.

A traditional shrimp farm having a bottom surface with a diameter of 12 feet, 6 inches would provide a surface area of 122.6 sqft. In this environment, a semi-intensive system would yield approximately 613 shrimp twice a year, or 5.4 pounds a year, and an intensive system would yield approximately 1839 shrimp two and a half times per year, or 20.25 pounds per year.

According to one embodiment of the present invention, a helical shaped shelving unit, with 8 inches between each level, employed in the same 12.5 ft x 8 ft tank provides 10 shelf levels in the tank. The shelving unit will employ an overflow pipe at its axis, having a 6 inch diameter, which connects to a drain pipe in the tank. If each shelf level provides 80% of the surface area of the floor of the tank, the surface area on which the shrimp may live could be increased by over 12 times the livable space of the same tank without a shelving unit. If the shrimp are able to live on both sides of the shelves (upper and bottom surfaces) this should provide approximately 2076 square feet of living space available for the shrimp, including the space on the floor of the tank. If a semi-intensive system for producing shrimp is used, this will provide about 9650 shrimp (equivalent to about 348 pounds of shrimp), every 6 months, or 696 pounds of shrimp per year, for a closed environment occupying less than 200 square feet of floor space. If an intensive system is used, it may be possible to produce over 2600 pounds of shrimp in the same amount of space per year.

While the invention has been disclosed herein in connection with certain embodiments and detailed descriptions, it will be clear to one skilled in the art that modifications or variations of such details can be made without deviating from the general concept of the invention. Similarly, the invention is not limited to the exemplary materials disclosed for construction of the various tanks, piping, and other parts of the systems disclosed herein, it will readily be recognized that other materials known in the art may also be used. Thus the invention is to be limited by the claims, and not by the embodiments and detailed description provided above.

## Claims

1. A shelving unit for raising aquatic animals in a closed environment, the shelving unit comprising: a helical shaped shelf that spirals downward at an angle from horizontal, wherein the shelf comprises a top and bottom surface, said top surface being sufficient to support the aquatic animals thereon and to allow feeding thereon by the aquatic animals.

2. The shelving unit according to claim 1 wherein the space between each level of the shelf ranges from:
about 2 inches to about 12 inches; or
from about 3 inches to about 4 inches.

3. The shelving unit according to claim 8 wherein the angle ranges from:
about 2° to about 45° from horizontal; or
from about 10° to about 20° from horizontal.

4. The shelving unit according to any one of claims 1 to 3 wherein the shelving unit is made from at least one material having a density greater than the density of water.

5. The shelving unit according to any one of claims 1 to 4 wherein the shelving unit is anchored in a position located inside the closed environment, optionally by attaching at least one weight to the shelving unit to increase the weight of the shelving unit.

6. The shelving unit according to any one of claims 1 to 5 wherein:
the top surface of the shelves is textured in order to allow the aquatic animals to grip the shelves; and/or
the bottom surface of the shelves is substantially solid to support the animals thereon, and is textured in order to allow the aquatic animals to grip the bottom surface of the shelves.

7. The shelving unit according to any one of claims 1 to 15 wherein the shelving unit has holes formed partially or completely through the shelves, the holes optionally having a diameter ranging from about 1 /32 inch to about 1/4 inch or from about 1/8 inch to about 3/16 inch.

8. The shelving unit according to any one of claims 1 to 7 wherein the shelves are about 1/8 inch thick.

9. The shelving unit according to any one of claim 1 to 8 wherein the shelf has a raised outer rim.

10. A system for raising aquatic animals, comprising: a closed environment for holding water, at least one shelving unit according to any one of claims 1 to 9 located within the closed environment, a feeding system for dispensing food onto the shelves, and a waste disposal system.

11. The system according to claim 10 wherein the floor of the closed environment has a vertical incline sufficient to allow excess food and waste products to collect at a low surface of the incline, the degree of the incline optionally ranging from about 5° to about 80° or from about 20° to about 45° from horizontal.

12. The system according to claim 10 or claim 11 wherein:
the feeding system dispenses food onto each shelf of the system; and/or
the feeding system is an automated system regulated by a timing system; and/or
the feeding system is located along the wall of the closed environment; and/or
the feeding system comprises satellite feeding tubes closed by a main feeding tube, wherein the satellite tubes are positioned to dispense food particles directly onto the shelves of the shelving unit, the feeding system optionally further comprising at least one water inlet connected to the main feeding tube and the satellite tubes so that the main feeding tube and satellite tubes can be flushed with water; and/or
the feeding system further comprises at least one reservoir for holding dry food, attached to the main feeding tube, the feeding system optionally further comprising at least one dry food storage container connected to the food reservoir, such that dry food is transferred from the food storage container to the food reservoir using a vacuum pump.

13. The system according to any one of claims 10 to 12 wherein the waste disposal system comprises at least one opening at the bottom of the closed environment to aid in the removal of excess food and waste products.

14. The system according to any one of claims 10 to 13 further comprising an overflow system to prevent water in the closed environment from overflowing, the overflow system optionally comprising at least one skimmer positioned on the outside of the closed environment at the desired water level to allow excess water to drain from the tank, the overflow system optionally further comprising at least one drain at the bottom of the closed environment in fluid connection with the skimmer, the overflow system optionally comprising at least ane tube located within the closed environment the tube optionally having an opening at the top of the closed environment such that excess water will spill over into the tube and drain, the overflow system optionally comprising concentric tubes, such that excess water flows up between the outer and inner tubes, and then drains through the inner overflow tube.

15. The system according to any one of claims 1 to 14 further comprising a system for flowing water over the surface of each of the shelves in a manner which allows the flow of the water to aid in removal of the excess food as waste products from the surface of the shelves.
